# EUROPEAN PATENT SPECIFICATION

(11) **EP 4 324 659 B1**
(45) Date of publication and mention of the grant of the patent: **07.01.2026**
(21) Application number: 21937023.6
(22) Date of filing: 07.09.2021
(51) Int. Cl.: A63H 9/00, A63H 33/10, B44C 5/00

(54) **ARTWORK AND METHOD FOR MANUFACTURING ARTWORK**
KUNSTWERK UND VERFAHREN ZUR HERSTELLUNG VON KUNSTWERKEN
OEUVRE D'ART ET PROCÉDÉ DE FABRICATION D'UNE OEUVRE D'ART

(30) Priority: 16.04.2021 JP 2021069676
(43) Date of publication of application: 21.02.2024
(73) Proprietor: Takeuchi, Osamu, Takaoka-shi, Toyama 933-0911 (JP)
(72) Inventor: Takeuchi, Osamu, Takaoka-shi, Toyama 933-0911 (JP)
(74) Representative: Rau, Schneck & Hübner Patentanwälte Rechtsanwälte PartGmbB
(86) International application number: PCT/JP2021/032814
(87) International publication number: WO 2022/219830

(56) References cited:
- JP-B2- 6 847 593
- JP-U- S5 610 800

## Description

### Technical Field

The present invention relates to an artwork and a method for manufacturing an artwork.

### Background Art

Conventionally, a representative example of metal artwork is a bronze statue. Bronze statues mostly depict portraits such as Buddha statues and nude female statues, and they lack novelty, making them unsuitable for the lifestyles and sensibilities of modern people. Additionally, because bronze statues are cast as a single unit, they cannot be compactly packaged for transport, resulting in enormous shipping costs when transporting them overseas.

JP 6 847593 B2 discloses a metal artistic craft comprising multiple parts that are connected by joints.

### Summary of Invention

### Technical Problem

In view of the aforementioned circumstances, an object of the present invention is to provide an artwork and a manufacturing method thereof that allows for diverse abstract expressions while reducing transportation costs.

### Solution to Problem

In order to achieve the object, the present claim 1 recites:
An artwork comprising a plurality of parts having various shapes,
wherein each part is provided with joint portions, and the joint portion has a cylindrical body with a prescribed length and a fully threaded bolt attached to an outer peripheral surface of the cylindrical body,
wherein the outer peripheral surface of the cylindrical body is fixed in contact with or close to the part, by the fully threaded bolt inserted into a hole formed in the part, and by screwing a nut onto the fully threaded bolt protruding from the hole, and
wherein the cylindrical bodies of the joint portions of the parts are secured in a rotationally fixed manner, by contacting the joint portions of each part to each other at end surfaces of the cylindrical body, and by screwing a nut onto a bolt passing through the cylindrical bodies.

Also, the present claim 2 recites:
A method for manufacturing an artwork comprising the steps of:
applying surface treatment to a plurality of parts having various shapes;
processing attachment holes for joint portions on each surface-treated part, wherein each joint portion has a cylindrical body with a prescribed length;
fixing an outer peripheral surface of the cylindrical body in contact with or close to the part, by attaching a fully threaded bolt to the outer peripheral surface of the cylindrical body, and by fixing the fully threaded bolt into a hole formed in the part by screwing a nut onto the fully threaded bolt protruding from the hole, and
connecting the parts to each other and securing the cylindrical bodies of the joint portions of each part in a rotationally fixed manner, by contacting the joint portions of each part to each other at end surfaces of the cylindrical body, and by screwing a nut onto a bolt passing through the cylindrical bodies.

### Advantageous Effects of Invention

The artwork according to claim 1 is capable of a diverse abstract expression by combining multiple parts of various shapes. In addition, since the parts can be joined and separated, they can be dismantled into individual parts for compact transportation, resulting in reduced transportation costs.

Furthermore, in the artwork of the present invention, each part has a joint portion, and the joint portion has a cylindrical body of a predetermined length and a full-threaded bolt attached to the outer peripheral surface of the cylindrical body. The full-threaded bolt is inserted into a hole formed in the part, and the nut is screwed onto the full-threaded bolt protruding from the hole to tighten and fix the outer peripheral surface of the cylindrical body to the part in contact or proximity. The joint portions of the respective parts are fixed to each other by inserting bolts through the cylindrical bodies and attaching nuts, thereby fixing the cylindrical bodies of the joint portions of the respective parts to prevent relative rotation. As a result, disassembly and assembly can be easily and quickly performed by anyone, and the use of cylindrical bodies in the joint portions ensures that there is no discomfort even if they are exposed externally, and the appearance is not compromised. Moreover, by not welding the cylindrical bodies of the joint portions to the parts, it is possible to provide joint portions at any position on the parts after surface treatment such as plating has been performed on the parts, thus improving the freedom of fabrication. Since the joint portions can be easily removed, reuse of the parts is also easy.

The method for manufacturing an artwork according to claim 2 comprising the steps of: applying surface treatment to a plurality of parts having various shapes; processing attachment holes for joint portions on each surface-treated part; fixing the outer peripheral surface of the cylindrical body in contact with or close to the part, by attaching a fully threaded bolt to an outer peripheral surface of the cylindrical body, and by fixing the fully threaded bolt into a hole formed in the part, and connecting the parts to each other and securing the cylindrical bodies of the joint portions of each part in a rotationally fixed manner, by contacting the joint portions of each part to each other at end surfaces of the cylindrical body, and by screwing a nut onto a bolt passing through the cylindrical bodies. Therefore, the method allows for diverse abstract expressions by combining variously shaped parts. Furthermore, since the parts can be joined and separated, when transporting, they can be disassembled into individual parts and made compact, reducing transportation costs. Moreover, by not welding the cylindrical bodies of the joint portions to the parts, joint portions can be provided at any position on the parts after surface treatment such as plating has been performed on the parts, thus improving the freedom of fabrication. Since the joint portions can be easily removed, reuse of the parts is also easy.

### Brief Description of Drawings

[Figure 1] Figure 1 is a perspective view showing one embodiment of the artwork according to the present invention.
[Figure 2] Figure 2 is an enlarged perspective view showing the joint between parts of the artwork.
[Figure 3] Figure 3(a) is a perspective view showing the joint separated from the parts, and Figure 3(b) is a perspective view showing the joint attached to the part.
[Figure 4] Figure 4(a) is a cross-sectional view showing an example not according to the present invention of the joint attached to a part and Figure 4(b) is a cross-sectional view showing an example according to the present invention of the joint attached to a part.

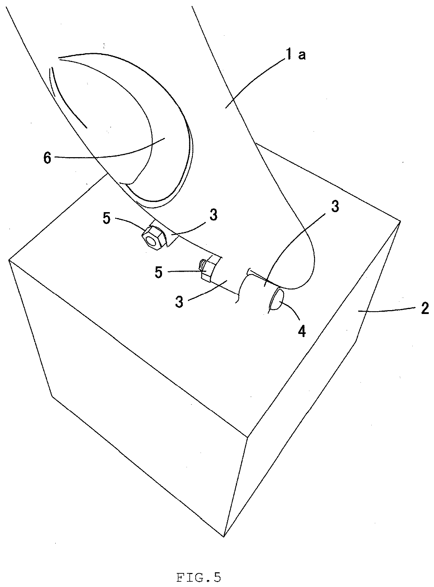

[Figure 5] Figure 5 is an enlarged perspective view showing the joint between a part and a base of the artwork.
[Figure 6] Figure 6(a) is an exploded perspective view showing parts for making a substantially C-shaped part, and Figure 6(b) is an exploded perspective view showing parts for making a substantially S-shaped part.
[Figure 7] Figure 7 is a perspective view showing another embodiment of the artwork according to the present invention.
[Figure 8] Figure 8 is a perspective view showing yet another embodiment of the artwork not according to the present invention.
[Figure 9] Figure 9 is a front view showing an enlarged joint between parts of the artwork not according to the invention.
[Figure 10] Figure 10 is a plan view showing the open and closed state of the artwork not according to the invention.
[Figure 11] Figure 11 is a perspective view showing another embodiment of the artwork not according to the present invention.
[Figure 12] Figure 12(a) is a cross-sectional view showing an enlarged joint between parts of the artwork not according to the invention, and Figure 12(b) is a front view of the same.

### Description of Embodiments

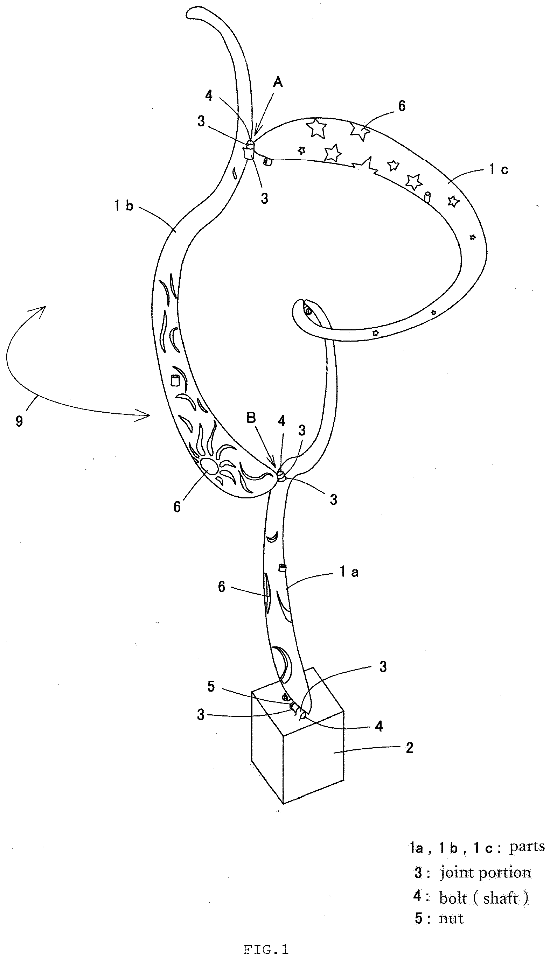

The following is a description of embodiments of the present invention based on the drawings. Figure 1 shows one embodiment of a artwork according to the present invention. This artwork is composed of two approximately S-shaped parts 1a, 1b and one approximately C-shaped part 1c, and includes a base 2 for standing and displaying the assembled three parts 1a, 1b, and 1c. By combining the approximately S-shaped parts 1a, 1b and the approximately C-shaped part 1c as appropriate, this artwork expresses the artist's various thoughts and concepts, creating a new genre of art. This artwork is approximately 1-2 meters tall.

Each of the parts 1a, 1b, and 1c is formed as a hollow metal casting with multiple holes 6 on the surface resembling stars, sun, etc. Opening multiple holes 6 in parts 1a, 1b, and 1c not only enhances the artistic quality but also reduces the weight. Each of the parts 1a, 1b, and 1c has a surface plating applied.

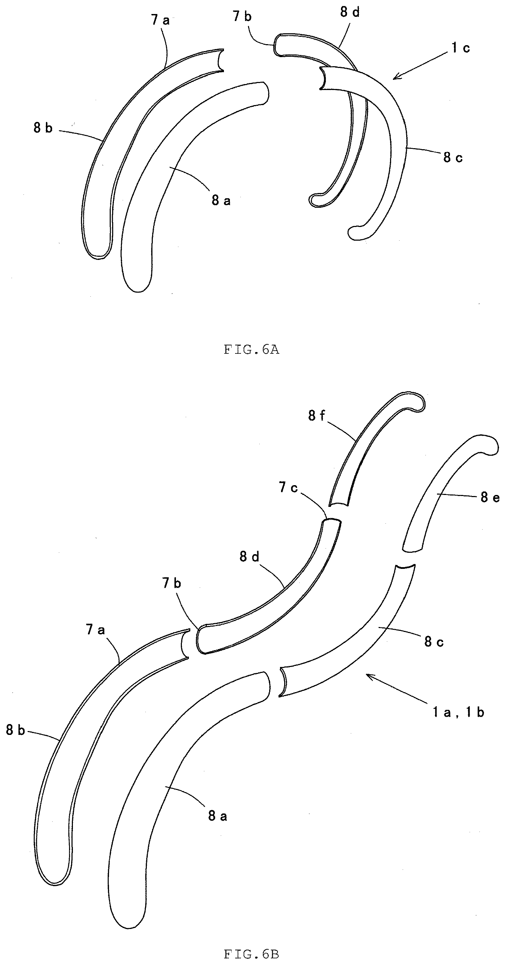

The substantially C-shaped part 1c is formed by casting four parts 8a, 8b, 8c, and 8d as shown in FIG 6(a). The substantially C-shaped part 1c is divided in half thickness along the longitudinal direction by a dividing surface 7a, and divided again across the longitudinal direction by a surface 7b. These four parts are welded together to produce the substantially C-shaped part 1c. Although not shown in the figure, each part 8a, 8b, 8c, and 8d has holes 6 formed when casting.

The substantially S-shaped parts is formed by casting six parts 8a, 8b, 8c, 8d, 8e, and 8f as shown in FIG. 6(b). The left and right parts 8c and 8d on the tip side of the four parts 8a, 8b, 8c, and 8d are divided again by a dividing surface 7c at the middle part, and the parts 8a, 8b, 8c, 8d, 8e, and 8f are joined together so that the bending direction is reversed at the longitudinal dividing surfaces 7b and 7c. With this method, either the substantially C-shaped part 1c or the substantially S-shaped parts 1a and 1b can be easily produced from the same parts.

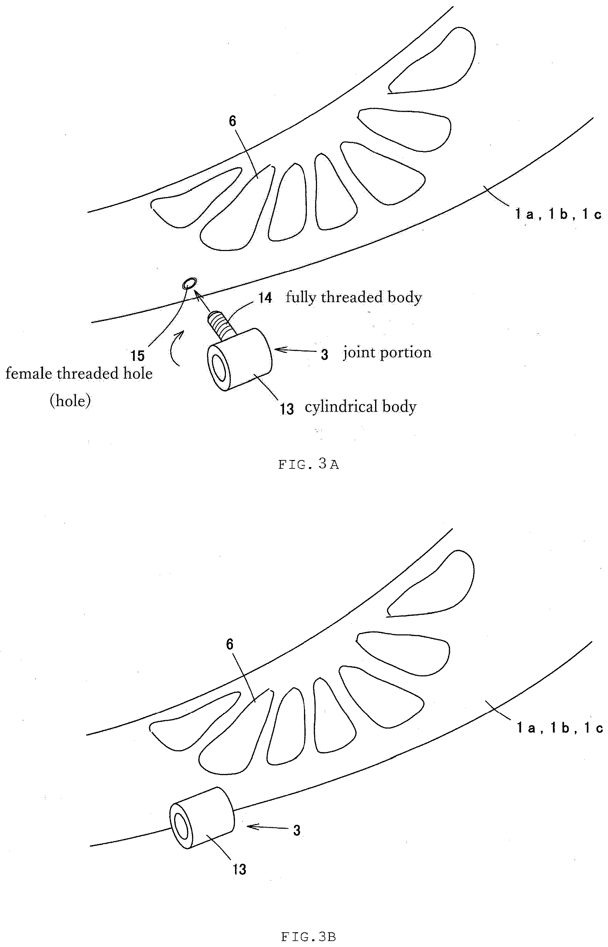

Each part 1a, 1b, and 1c has multiple joining portions 3, 3, ... provided at appropriate locations on its surface. Each joining portion 3, 3, ... has a metal cylinder 13 cut to a length of about 1-2 cm as shown in FIG. 3(a), and a fully threaded bolt 14 attached to the outer peripheral surface of the cylinder 13 by welding. The fully threaded bolt 14 is screwed into a female threaded hole 15 formed in parts 1a, 1b, and 1c, and as shown in FIG. 3(b), the outer peripheral surface of the cylinder 13 is attached to the surface of parts 1a, 1b, and 1c by being in contact with or close to them.

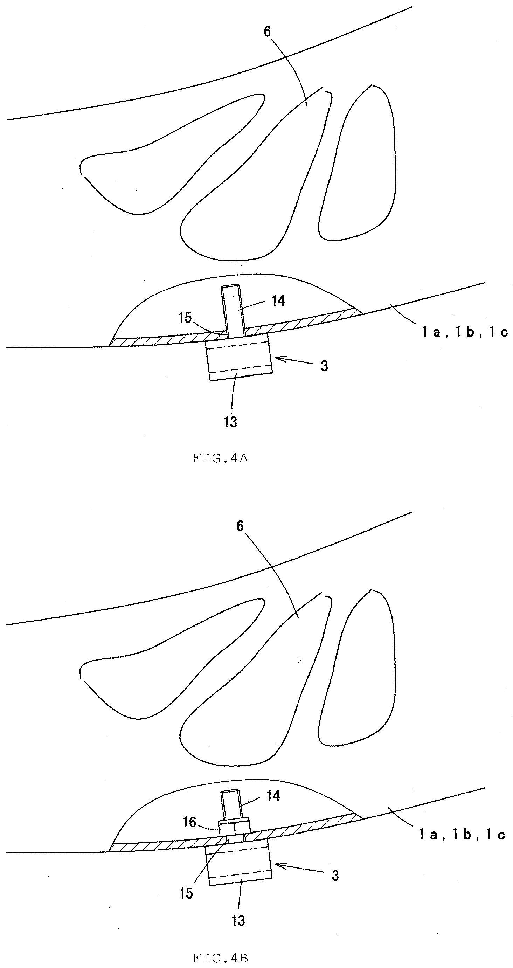

In an embodiment not according to the invention, the joint portion 3 may be attached to the parts 1a, 1b, and 1c simply by screwing the fully threaded bolt 14 into the female threaded hole 15, as shown in Figure 4(a). According to the invention, a nut 16 is inserted into a hole 6 formed in each part 1a, 1b, or 1c, and the nut 16 is tightened by engaging it with the fully threaded bolt 14, as shown in Figure 4(b). This allows the joint portion 3 to be securely fixed to the parts 1a, 1b, and 1c and enables adjustment of the axial direction of the cylinder 13.

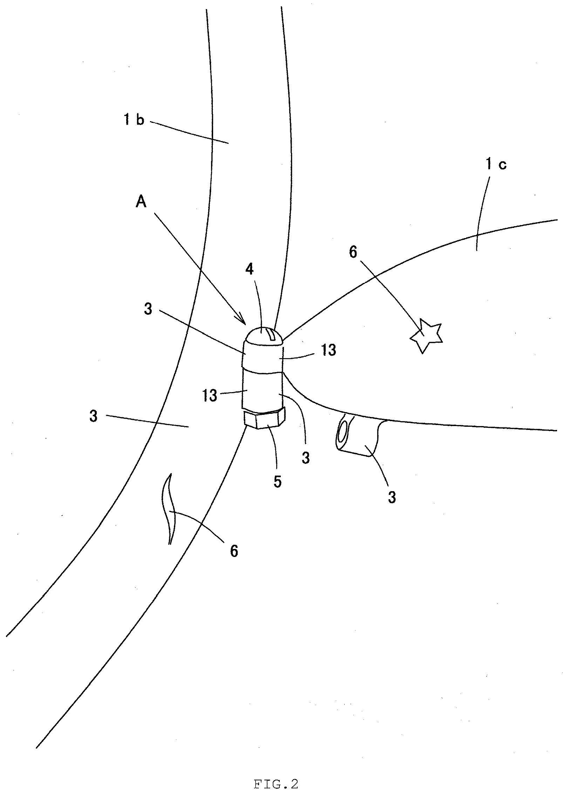

The parts 1a, 1b, and 1c are joined together by aligning their joint portions 3, 3 with each other on the end faces of the cylindrical body 13 as shown in Figure 2, and passing the bolt (axis) 4 through them. Then, by tightening the nut 5 onto the threaded portion of the bolt 4 protruding from the joint portion 3, the parts 1a, 1b, and 1c are joined together. Therefore, by removing the bolt 4 and nut 5, each part 1a, 1b, and 1c can be separated and reassembled easily. Each part 1a, 1b, and 1c has extra joint portions 3, as shown in Figure 2, for different assembly configurations.

The substantially S-shaped part 1b located in the upper left part of Figure 1 is joined with other parts 1a and 1c at two joint locations A and B. The center axes of the bolts 4 at both joint locations A and B are aligned on the same straight line, so by loosening the bolts 4 or nuts 5 at both joint locations A and B, the same part 1b can be rotated around joint locations A and B as fulcrums, as indicated by arrow 9 in the figure.

Part 1a and the base 2 are also joined together by inserting bolts 4 through the joint portions 3, 3 provided on each of them, and tightening them with nuts 5 screwed onto the protruding bolt 4 from the joint portions 3. By removing the bolts 4 and nuts 5, part 1a and base 2 can be separated, as shown in Figure 3.

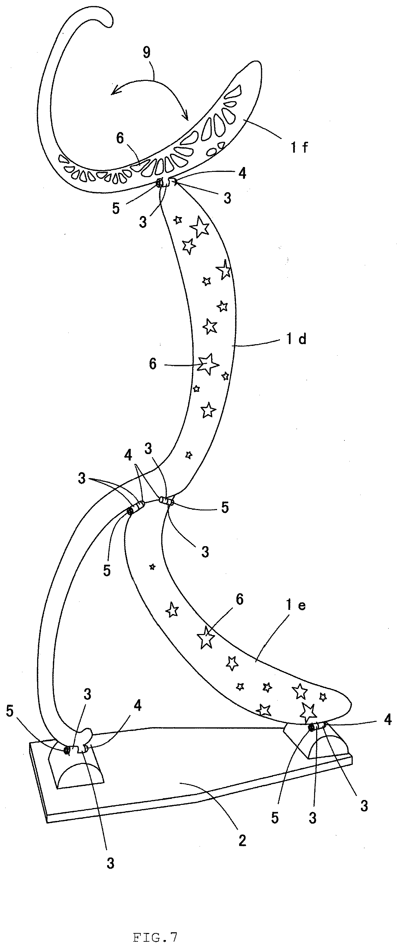

Figure 7 shows another embodiment of the artwork according to the present invention. This artwork consists of one roughly S-shaped part 1d made of cast metal, and two roughly C-shaped parts 1e and 1f, which are combined together. Additionally, it has a metal base 2 for displaying the artwork in an upright position. The parts 1d, 1e, 1f and the base 2 are joined and detachable from each other by passing bolts 4 through their respective connecting parts 3, 3, and tightening nuts 5, as in the embodiment described earlier. The upper C-shaped part 1f can be pivoted around the joint with part 1d, as indicated by arrow 9 in the figure.

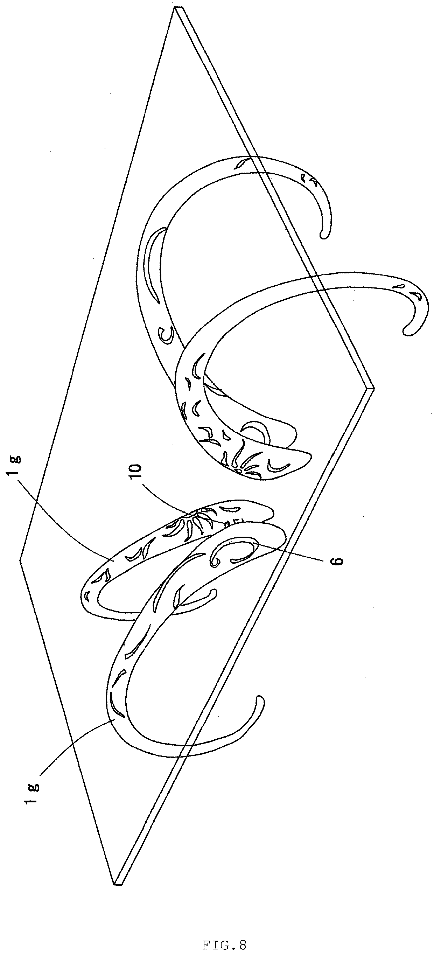

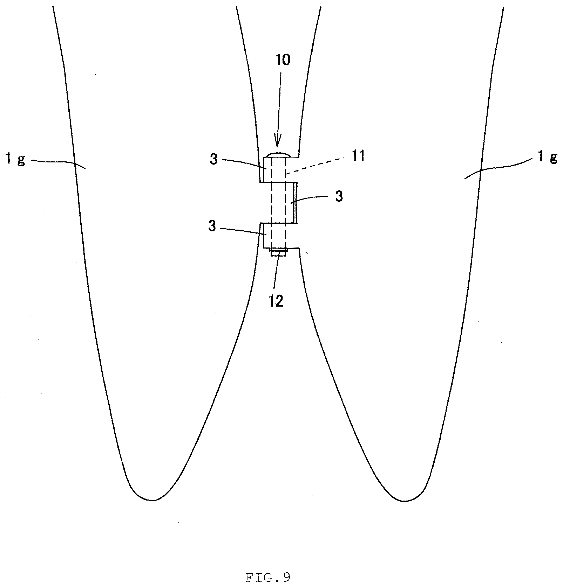

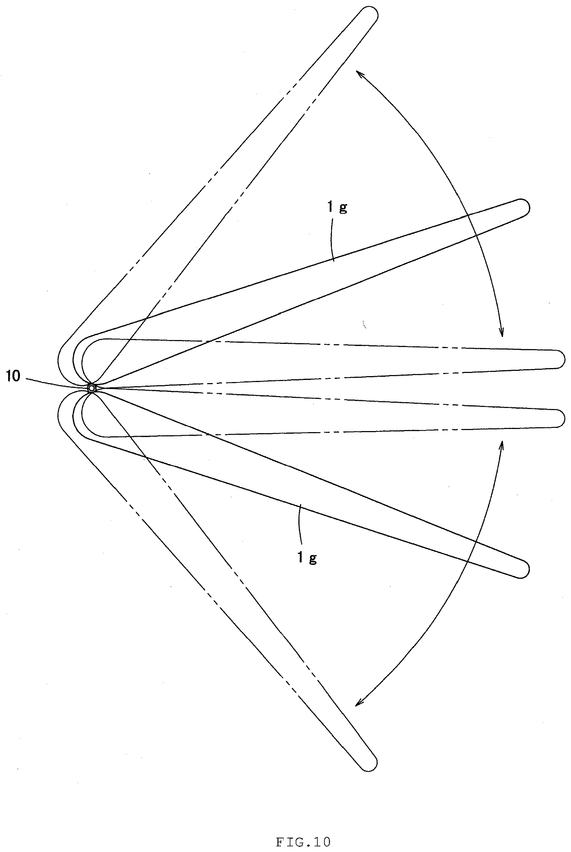

Figure 8 shows another embodiment of the artwork not according to the present invention, which can be used as a table leg. This artwork is constructed by connecting a pair of substantially C-shaped parts 1g, 1g formed in a hollow shape by a hinge 10. As shown in Figure 9, the hinge 10 has cylindrical joint portions 3, 3, 3 attached to each part 1g, 1g, and a pin (axis) 11 is inserted from above into the joint portions 3, 3, 3, and a retaining ring 12 is attached to the tip of the pin 11 to prevent it from coming out. According to this invention, instead of using the pin 11 and retaining ring 12, a bolt 4 and nut 5 are used. This artwork can be separated into individual parts 1g, 1g by removing the retaining ring 12 and taking out the pin 11. As shown in Figure 10, the angle between the two parts 1g, 1g can be adjusted from 0° to about 90° using the hinge 10 as a pivot, so when not in use, the two parts 1g, 1g can be almost stuck together and stored in a narrow space without separating them.

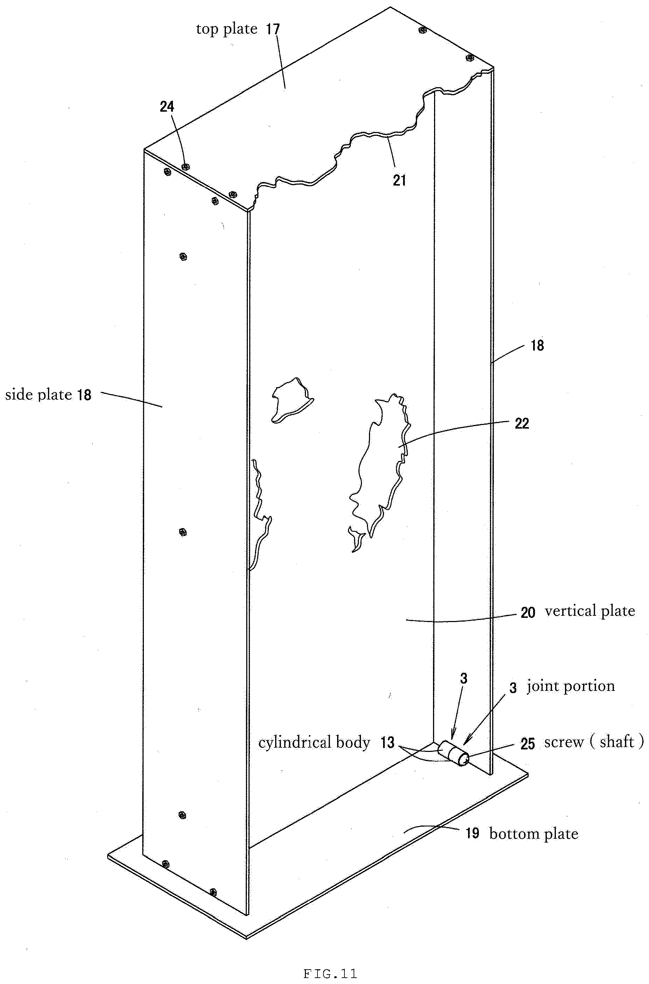

Figure 11 shows another embodiment of the artwork not according to the present invention. This artwork is formed into a rectangular box shape by framing a bronze top plate (part) 17, left and right side plates (parts) 18, 18, and a bottom plate (part) 19, and attaching a vertical plate (part) 20 to the inside. The top plate 17 and the vertical plate 20 have intricate notches 21 and holes 22, which enhance the artistic appearance.

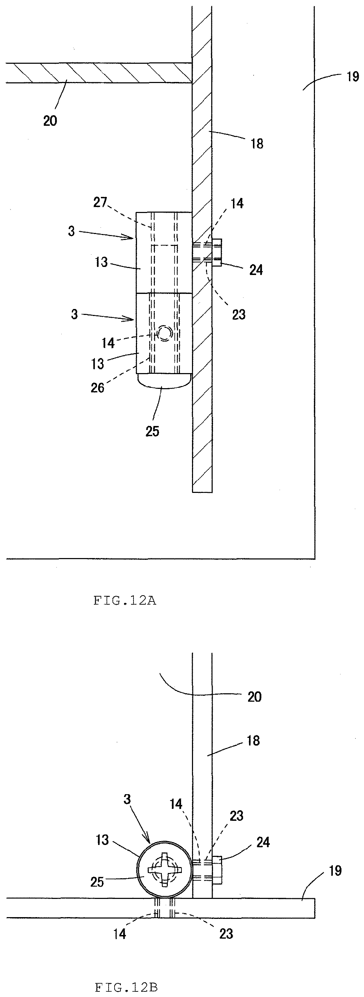

Parts 17, 18, 19, and 20 each have joint portions 3, as shown in Figure 12. The joint portion 3 consists of a metal cylinder 13 cut to a length of about 1-2 cm and a fully threaded bolt 14 attached to the outer peripheral surface of the cylinder 13 by welding. The cylinder 13 is attached to each part 17, 18, 19, and 20 by inserting the fully threaded bolt 14 into a hole (dummy hole) 23 formed in each part 17, 18, 19, and 20 and tightening it with a nut 24. The two parts with joint portions 3 attached are connected and fixed in a way not according to the invention by aligning the end faces of the cylinder 13 and passing a screw (axle) 25 through them. A dummy hole 26 for inserting the screw 25 is formed in the front-side cylinder 13, and a female screw hole 27 for screwing the screw 25 is formed in the rear-side cylinder 13, allowing the cylinders 13 to be connected and fixed to each other by simply tightening the screw 25 through the adjacent cylinders 13, 13. The parts can also be easily separated from each other by rotating the screw 25 in the reverse direction and pulling it out from the cylinders 13, 13.

As mentioned above, this artwork is capable of expressing a variety of abstract concepts by combining multiple parts of various shapes, such as 1a, 1b, 1c, 1d, 1e, 1f, 1g, 17, 18, 19, and 20. All things in nature are composed of combinations of curves, and by combining suitable parts of a roughly C-shaped or S-shaped design, it is possible to create outstanding works of art that strongly appeal to people's hearts. By preparing several types of parts of different sizes and shapes, such as 1a, 1b, 1c, 1d, 1e, 1f, and 1g, and freely combining them, it is possible to create an infinite number of expressions, and this standardized combination of parts enables the production of a wide range of unique and high-quality products in small quantities.

In addition, this artwork can be disassembled and assembled easily, allowing the parts 1a, 1b, 1c, 1d, 1e, 1f, 1g, 17, 18, 19, 20 to be separated and compactly packed for transportation, thus reducing transportation costs.

Furthermore, this artwork includes a metal base 2, which allows it to be easily displayed anywhere. Additionally, the parts 1a, 1b, 1c, 1d, 1e, and 1f, which are in the shape of abbreviated C or S, can be attached and detached from the base 2, making it easy to transport.

The art craft includes parts 1a, 1b, 1c, 1d, 1e, 1f, 1g, 17, 18, 19, 20, each having joint portions 3, 3, ... respectively. By passing bolts 4 through the joint portions 3, 3, the parts 1a, 1b, 1c, 1d, 1e, 1f, 1g, 17, 18, 19, 20 can be joined and separated, and disassembly and assembly can be easily performed by anyone in a short time. When nuts 5 are screwed onto bolts 4 passing through joint portion 3, parts 1a, 1b, 1c, 1d, 1e, and 1f can be firmly fixed to each other by tightening bolts 4 or nuts 5. Moreover, since the joints 3 and the heads of bolts 4 or nuts 5 can be made inconspicuous, the appearance is not impaired.

When attaching the joint portion 3 in a way not according to the invention to the surface of the parts 1a, 1b, 1c, 1d, 1e, 1f, 1g, 17, 18, 19, and 20 by welding, it is necessary to weld the joint portion 3 before performing the plating process on each part 1a, 1b, 1c, 1d, 1e, 1f, 1g, 17, 18, 19, and 20. If you want to change the combination of parts 1a, 1b, 1c, 1d, 1e, 1f, 1g, 17, 18, 19, and 20 later, you will have to sand or remove the joint parts 3 and perform plating process again, which is a cumbersome task.

In contrast, this artwork consists of a metal cylinder 13 that has been cut to a predetermined length as the joint portion 3 and a fully threaded bolt 14 attached to the outer surface of the cylinder 13. The fully threaded bolt 14 is fixed to holes (female screw holes 15, hole 23) formed in each part 1a, 1b, 1c, 1d, 1e, 1f, 1g, 17, 18, 19, and 20, and the outer surface 13 of the cylinder 13 is attached or brought into proximity to each part 1a, 1b, 1c, 1d, 1e, 1f, 1g, 17, 18, 19, and 20. Therefore, after applying a plating process to each part 1a, 1b, 1c, 1d, 1e, 1f, 1g, 17, 18, 19, and 20, joint portion 3 can be attached by simply machining holes 15 and 23 at any position, increasing the freedom of production. Furthermore, since the joint portion 3 can be easily removed, reusing unwanted parts 1a, 1b, 1c, 1d, 1e, 1f, 1g, 17, 18, 19, and 20 is also easy.

By inserting a nut 16 into the holes 6 formed in parts 1a, 1b, 1c, 1d, 1e, 1f, and 1g, and tightening it by screwing it onto the fully threaded bolt 14, the joint portion 3 can be firmly fixed to parts 1a, 1b, 1c, 1d, 1e, 1f, and 1g while also adjusting the axial direction of the cylinder 13.

Furthermore, this artwork allows for a variety of expressions by enabling the parts 1b, 1f, and 1g, which are shaped roughly C-shaped or S-shaped, to change their direction at the joint points with other parts. By changing the orientation of parts 1b, 1f, and 1g as desired, a wide range of expressions can be achieved, keeping the viewer engaged. Additionally, changing the orientation of parts 1b, 1f, and 1g can also save space during transportation.

This invention is not limited to the embodiments described above. The size, shape, material, number, etc. of the parts that make up the artwork can be appropriately modified. For example, parts in the roughly C-shaped or S-shaped can also be formed from resin. The structure of the connecting parts between the parts and between the parts and the base only needs to be a structure that can be repeatedly joined and separated and is not limited to the use of bolts and nuts. The method for producing parts in the shape of a C or S is optional, and it is not necessary to weld together halves of thickness along the longitudinal direction, but they can also be cast in a hollow shape.

### Reference Signs List

- 1a, 1b, 1c, 1d, 1e, 1f, 1g:: parts
- 2:: base
- 3:: joint portion
- 4:: bold
- 5:: nut
- 11:: pin
- 13:: cylindrical body
- 14:: fully threaded bolt
- 15:: female threaded hole
- 17:: top plate
- 18:: side plate
- 19:: bottom plate
- 20:: vertical plate
- 23:: hole
- 25:: screw

## Claims

1. An artwork comprising a plurality of parts (1a, 1b, 1c, 1d, 1e, 1f) having various shapes,
wherein each part (1a, 1b, 1c, 1d, 1e, 1f) is provided with joint portions (3), and the joint portion (3) has a cylindrical body (13) with a prescribed length and a fully threaded bolt (14) attached to an outer peripheral surface of the cylindrical body (13),
wherein the outer peripheral surface of the cylindrical body (13) is fixed in contact with or close to the part (1a, 1b, 1c, 1d, 1e, 1f), by the fully threaded bolt (14) inserted into a hole (15) formed in the part (1a, 1b, 1c, 1d, 1e, 1f), and by screwing a nut (16) onto the fully threaded bolt (14) protruding from the hole (15), and
wherein the cylindrical bodies (13) of the joint portions (3) of the parts (1a, 1b, 1c, 1d, 1e, 1f) are secured in a rotationally fixed manner, by contacting the joint portions (3) of each part (1a, 1b, 1c, 1d, 1e, 1f) to each other at end surfaces of the cylindrical body (13), and by screwing a nut (5) onto a bolt (4) passing through the cylindrical bodies (13).

2. A method for manufacturing an artwork comprising the steps of:
applying surface treatment to a plurality of parts (1a, 1b, 1c, 1d, 1e, 1f) having various shapes;
processing attachment holes (15) for joint portions (3) on each surface-treated part (1a, 1b, 1c, 1d, 1e, 1f), wherein each joint portion (3) has a cylindrical body (13) with a prescribed length;
fixing an outer peripheral surface of the cylindrical body (13) in contact with or close to the part (1a, 1b, 1c, 1d, 1e, 1f), by attaching a fully threaded bolt (14) to the outer peripheral surface of the cylindrical body (13), and by fixing the fully threaded bolt (14) into a hole (15) formed in the part (1a, 1b, 1c, 1d, 1e, 1f) by screwing a nut (16) onto the fully threaded bolt (14) protruding from the hole (15), and
connecting the parts (1a, 1b, 1c, 1d, 1e, 1f) to each other and securing the cylindrical bodies of the joint portions (3) of each part (1a, 1b, 1c, 1d, 1e, 1f) in a rotationally fixed manner, by contacting the joint portions (3) of each part (1a, 1b, 1c, 1d, 1e, 1f) to each other at end surfaces of the cylindrical body (13), and by screwing a nut (5) onto a bolt (4) passing through the cylindrical bodies (13).

## Patentansprüche

1. Kunstwerk, umfassend mehrere Teile (1a, 1b, 1c, 1d, 1e, 1f) mit verschiedenen Formen,
wobei jeder Teil (1a, 1b, 1c, 1d, 1e, 1f) mit Verbindungsabschnitten (3) versehen ist und der Verbindungsabschnitt (3) einen zylindrischen Körper (13) mit einer vorgegebenen Länge und einen vollständig mit Gewinde versehenen Bolzen (14) aufweist, der an einer äußeren Umfangsfläche des zylindrischen Körpers (13) angebracht ist,
wobei die äußere Umfangsfläche des zylindrischen Körpers (13) in Kontakt mit oder nahe dem Teil (1a, 1b, 1c, 1d, 1e, 1f) befestigt ist, durch den vollständig mit Gewinde versehenen Bolzen (14), der in ein Loch (15) eingeführt ist, das in dem Teil (1a, 1b, 1c, 1d, 1e, 1f) gebildet ist, und durch Aufschrauben einer Mutter (16) auf den vollständig mit Gewinde versehenen Bolzen (14), der aus dem Loch (15) herausragt, und
wobei die zylindrischen Körper (13) der Verbindungsabschnitte (3) der Teile (1a, 1b, 1c, 1d, 1e, 1f) in drehfester Weise gesichert sind, durch Inkontaktbringen der Verbindungsabschnitte (3) jedes Teils (1a, 1b, 1c, 1d, 1e, 1f) an Endflächen des zylindrischen Körpers (13) miteinander und durch Aufschrauben einer Mutter (5) auf einen Bolzen (4), der durch die zylindrischen Körper (13) verläuft.

2. Verfahren zum Herstellen eines Kunstwerks, umfassend die Schritte:
Anwenden einer Oberflächenbehandlung auf mehrere Teile (1a, 1b, 1c, 1d, 1e, 1f) mit verschiedenen Formen;
Bearbeiten von Anbringungslöchern (15) für Verbindungsabschnitte (3) auf jedem oberflächenbehandelten Teil (1a, 1b, 1c, 1d, 1e, 1f), wobei jeder Verbindungsabschnitt (3) einen zylindrischen Körper (13) mit einer vorgegebenen Länge aufweist;
Befestigen einer äußeren Umfangsfläche des zylindrischen Körpers (13) in Kontakt mit oder nahe dem Teil (1a, 1b, 1c, 1d, 1e, 1f), durch Anbringen eines vollständig mit Gewinde versehenen Bolzens (14) an der äußeren Umfangsfläche des zylindrischen Körpers (13) und durch Befestigen des vollständig mit Gewinde versehenen Bolzens (14) in einem Loch (15), das in dem Teil (1a, 1b, 1c, 1d, 1e, 1f) gebildet ist, durch Aufschrauben einer Mutter (16) auf den vollständig mit Gewinde versehenen Bolzen (14), der aus dem Loch (15) herausragt, und
Verbinden der Teile (1a, 1b, 1c, 1d, 1e, 1f) miteinander und Sichern der zylindrischen Körper der Verbindungsabschnitte (3) jedes Teils (1a, 1b, 1c, 1d, 1e, 1f) in drehfester Weise, durch Inkontaktbringen der Verbindungsabschnitte (3) jedes Teils (1a, 1b, 1c, 1d, 1e, 1f) an Endflächen des zylindrischen Körpers (13) miteinander und durch Aufschrauben einer Mutter (5) auf einen Bolzen (4), der durch die zylindrischen Körper (13) verläuft.

## Revendications

1. Œuvre d'art comprenant une pluralité de parties (1a, 1b, 1c, 1d, 1e, 1f) ayant des formes diverses,
dans laquelle chaque partie (1a, 1b, 1c, 1d, 1e, 1f) est pourvue de portions d'assemblage (3), et la portion d'assemblage (3) présente un corps cylindrique (13) ayant une longueur prescrite et un boulon entièrement fileté (14) attaché à une surface périphérique extérieure du corps cylindrique (13),
dans laquelle la surface périphérique extérieure du corps cylindrique (13) est fixée pour être en contact avec la partie (1a, 1b, 1c, 1d, 1e, 1f) ou près de celle-ci, par le boulon entièrement fileté (14) inséré dans un trou (15) formé dans la partie (1a, 1b, 1c, 1d, 1e, 1f), et en vissant un écrou (16) sur le boulon entièrement fileté (14) faisant saillie à partir du trou (15), et dans laquelle
les corps cylindriques (13) des portions d'assemblage (3) des parties (1a, 1b, 1c, 1d, 1e, 1f) sont fixés de manière solidaire en rotation, en mettant en contact les portions d'assemblage (3) de chaque partie (1a, 1b, 1c, 1d, 1e, 1f) les unes avec les autres au niveau de surfaces d'extrémité du corps cylindrique (13), et en vissant un écrou (5) sur un boulon (4) passant à travers les corps cylindriques (13).

2. Procédé de fabrication d'une œuvre d'art, comprenant les étapes consistant à :
appliquer un traitement de surface à une pluralité de parties (1a, 1b, 1c, 1d, 1e, 1f) ayant des formes diverses ;
traiter des trous d'attache (15) pour des portions d'assemblage (3) sur chaque partie traitée en surface (1a, 1b, 1c, 1d, 1e, 1f), dans lequel chaque portion d'assemblage (3) présente un corps cylindrique (13) ayant une longueur prescrite ;
fixer une surface périphérique extérieure du corps cylindrique (13) en contact avec la partie (1a, 1b, 1c, 1d, 1e, 1f) ou près de celle-ci, en attachant un boulon entièrement fileté (14) à la surface périphérique extérieure du corps cylindrique (13), et en fixant le boulon entièrement fileté (14) dans un trou (15) formé dans la partie (1a, 1b, 1c, 1d, 1e, 1f) en vissant un écrou (16) sur le boulon entièrement fileté (14) faisant saillie à partir du trou (15), et
raccorder les parties (1a, 1b, 1c, 1d, 1e, 1f) les unes aux autres et fixer les corps cylindriques des portions d'assemblage (3) de chaque partie (1a, 1b, 1c, 1d, 1e, 1f) de manière solidaire en rotation, en mettant en contact les portions d'assemblage (3) de chaque partie (1a, 1b, 1c, 1d, 1e, 1f) les unes avec les autres au niveau de surfaces d'extrémité du corps cylindrique (13), et en vissant un écrou (5) sur un boulon (4) passant à travers les corps cylindriques (13).
